# EUROPEAN PATENT APPLICATION

(11) **EP 0 724 373 A2**
(43) Date of publication of application: **31.07.1996**
(21) Application number: 95117272.5
(22) Date of filing: 02.11.1995
(51) Int. Cl.: H04Q 7/38, H04Q 7/32, H04B 7/26

(54) **An automatic telecommunication operator switching control system and method**

(30) Priority: 24.01.1995 JP 8804/95
(71) Applicant: OI ELECTRIC CO., LTD., Yokohama-shi, Kanagawa 222 (JP)
(72) Inventor: Ishigaki, Junichi, c/o OI Electric Co, Ltd, Yokohama-shi, Kanagawa 222 (JP)
(74) Representative: Heim, Hans-Karl, Dipl.-Ing.

(57) **Abstract**

A method for the automatic switching of common operators is provided in which the user at a receiving station can be immediately notified of a switch of common operators providing information transmission services, and of the identity of the new operator.
Even if the receiving terminal receives flagged band area information (BAI) to trigger frequency scanning, when invalidate border area information data has been set, no frequency scanning occurs, and thus automatic switching does not take place. When radio signals from the common operator providing information transmission services can no longer be received, frequency scanning automatically starts, and automatic switching to a operator with whom transmission is possible take place. This is accompanied by sound, LCD display, blinking lamps, etc., in order to immediately alert the user to the fact that automatic switching has been performed.

## Description

### Background of the invention

### Field of Invention

This invention relates to an automatic telecommunication operator switching system, and more particularly to an automatic operator switching control system that attempts to improve such a system.

### Related Art

With the high level of development in wireless transmission technology in recent years, various types of mobile transmission have been developed and are in use. The POCSAG method, which was developed in England and is now the mainstream in Europe, is one such example. However, working toward the integration of the EU market, a new method of mobile communication which does not have its applications restricted by national boundaries is desired, and the mobile communication method ERMES (European Radio Message System) was developed as a standard paging method. By using this method, mobile transmission transcending the respective areas of the telecommunication operator (hereinafter simply called "operator") of various countries is possible.

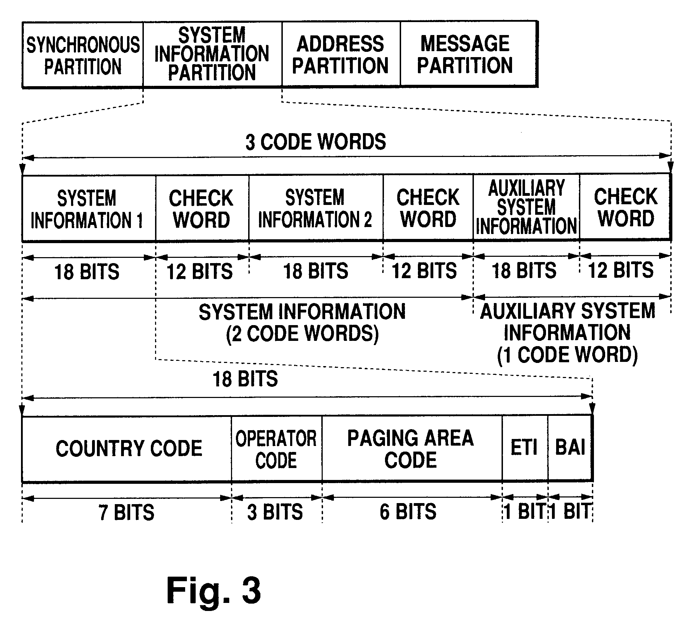

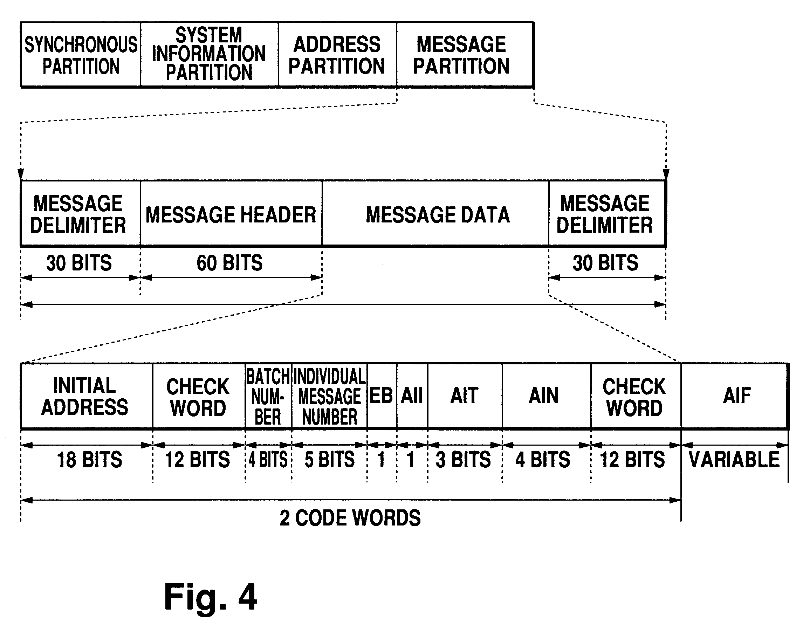

The ERMES transmission format comprises 16 frequency channels, each consisting of 16 batches. The first to fifteenth batches are 154 code words in length, and the 16th batch is 190 code words in length. The term "code word" refers to the unit block of bits that is transmitted, each code word being 30 bits. Each batch consists of four partitions: (1) a synchronizing partition used by each receiving terminal for synchronization; (2) a system information partition for identifying the operator or for operating information; (3) an address partition for the initial address of the calling terminal; and (4) a message partition for the message that is to be transmitted to the receiving terminals. Figure 3 illustrates the frame composition of a system information partition, and Figure 4 illustrates the frame composition of a message partition.

The system information partition of 3-code word in length divides the 36-bit system information into two 18 bit sections. The first section includes the country code, operator code, paging area code, external traffic indicator (ETI), and border area indicator.

Since the composition within the message partition may differ depending on the existence of additional information, its length is variable (1 to 16 code blocks). The figure illustrates a case where there is additional information. In such a case, the message header consists of a local address consisting of an initial address and a batch number, an individual message number, an external bit (EB), an additional information indicator field (AII), an additional information type (AIT), and an additional information number (AIN). An AII of 1 indicates that there is additional information. The additional information field (AIF) is added after the message header.

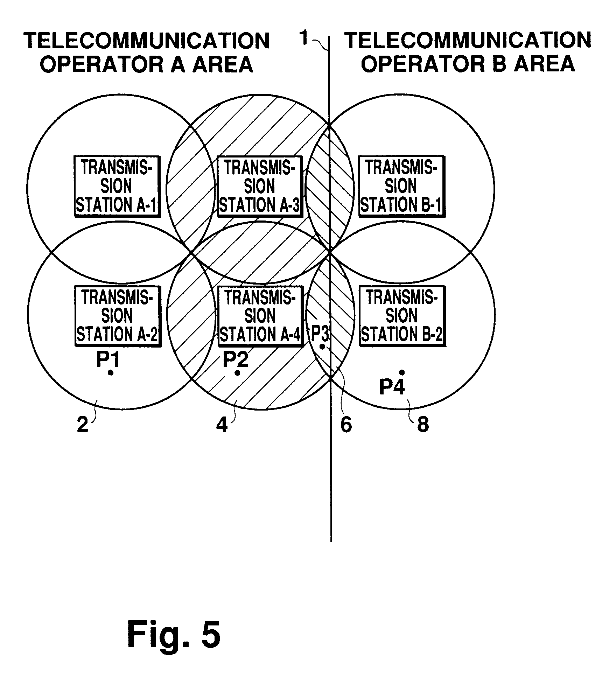

Operators conduct wireless transmission by using the above-mentioned format to prepare information such as messages to be sent to receiving terminals. Below, the main features of the ERMES mobile transmission method will be explained with reference to Figure 5.

The service areas of Operators A and B in Figure 5 are divided by border line 1. Border line 1 may, for instance, represent a national border. In Figure 5, transmission stations A-1 through A-4 belong to Operator A, and B-1 and B-2 belong to Operator B, providing information transmission services within their respective areas. When a receiving station moves from Operator A Area to Operator B Area, it can continue to receive information addressed to it by switching from Operator A to Operator B. Moreover, under ERMES, messages transmitted from transmission stations such as A-3, A-4, B-1 and B-2 which are situated on the border line with another operator have their border area indicator (BAI) flagged (BAI=1) to indicate that the receiving terminal is approaching a border.

The operation of conventional automatic operator switching control system will be explained in greater detail below.

In Figure 5, positions P1 through P4 indicate the positions of a receiving terminal user as he moves. In position P1 , information transmission services are available solely from Operator A, and the user is in Zone 2 where the BAI is 0. In position P2, information transmission services are available solely from Operator A, and the user is in Zone 4 where the BAI is 1. In Figure 5, Zone 4 is the shaded area with lines going from lower left to upper right. In position P3, information transmission services are available both from Operater A and from Operater B, and the user is in Zone 6 where the BAI is 1. Zone 6 in Figure 5 is demarked by lines going from upper left to lower right. In position P4, information transmission services are available solely from Operater B, and the user is in Zone 8 where the BAI is 1.

The receiving terminal at position P1 receives transmissions directed at it from transmission site A-2 of Operater A, and thus receives the information sent to it. At this point, Operater A is the sole provider of information transmission services. When the receiving terminal has moved to position P2, it receives information from transmission station A-4 of Operator A. Here, since the system information of the transmission includes a flagged border area indicator, BAI=1, the receiving terminal starts to scan other frequencies for other operators with receivable information. In this case, at position P2, it is not possible to receive the wave signals of other common carriers, and therefore the reception of information from A-4 continues while other frequencies are scanned. When the receiving terminal has moved to position P3, since wave signals from transmission station B-2 are receivable, an automatic switch from Operator A to Operator B takes place. Since frequency scanning does not occur unless the BAI is first reset to 0, automatic switching-back does not occur. Therefore, as long as the receiving terminal remains within zone 6, there is no automatic switching of operater because the BAI value remains at 1. When automatic switching of operator occurs at a receiving terminal, the user (subscriber) contacts Operator A to request that his information transmitting services provider be switched to Operator B. Operator A contacts Operator B accordingly, and henceforth incoming messages are received from Operator B. Operater A ceases to provide information transmission services at this point.

If, for instance, the power of the receiving terminal is turned off at position P1 and later turned on again at position P4, with the result that the receiving terminal at position P4 is still set to receive wave signals from Operator A, the receiving terminal will automatically begin frequency scanning because it can no longer receive signals from Operator A. The switching of operator is complete when the receiving terminal automatically begins to receive from Operator B.

From the above, it can be seen that the prior art involves the automatic switching of common carriers in accordance with the position of the receiving terminal. When automatic switching occurs, the user contacts the common carrier by means of telephone, etc., in order to request that the common carrier transmitting his messages be switched.

However, with existing methods of operator switching control, there is no way of informing the user that the receiving terminal has automatically switched operator. As a result, messages are sometimes lost when, although the receiving terminal has already automatically switched operator and awaits information from the new oeprator, the switching of oeprator to which information is actually being transmitted does not take place soon enough. As a preventive measure, it is possible to transmit messages to receiving terminals from a plurality of oeprators; however, this system entails the use of extra batches and therefore causes the problem of extremely poor transmitting efficiency.

Furthermore, when positioned near a service area boundary, such as that of Operator A in Figure 5, a user who does not leave the area within which the reception of wave signals from Operator A is possible would find ir inconvenient to use a receiving terminal employing the existing system of operator switching control automatically switching operator whenever the terminal is moved into the vicinity of Zone 2 or 4.

### Summary

There is provided a system to immediately inform the user that automatic switching of telecommunication operator providing information transmission services has occurred at the receiving station and to identify the opeartor to the user. Furthermore, there is provided a method for automatic operator switching control that automatically switches operators only when necessary.

In order to achieve the above-mentioned object, the present invention provides an automatic operator switching control system that can, upon receiving border area information at a receiving station, perform a frequency scan and automatically switch from one operator with at least one transmission station providing a plurality of mobile receiving stations with information transmission services to another operator, and further comprises means at each receiving station of notifying the user when automatic switching of operators takes place and of identifying the new operator.

In accordance with another aspect of the invention, there is provided an automatic operator switching control system that can, upon receiving border area information at a receiving station, perform a frequency scan and automatically switch from one operator with at least one transmission station providing a plurality of mobile receiving stations with information transmission services to another operator, and further comprises a means at each receiving station whereby automatic operator switching is prohibited during the period in which data indicating that invalid border area information should be invalidated has been received and is recorded.

In accordance with another aspect of the invention, there is provided an automatic operator switching control method which informs the user at the receiving station of any automatic operator switching, therefore alerting the user to the fact that he has entered the service area of another operator, allowing him to immediately request that the provider of his information transmission services be switched.

Furthermore, when the receiving station receives invalidate border area information data from a transmitting station, during the period in which the invalidate border area information data is recorded in memory, even if reception of wave signals from another operator is possible, the receiving terminal will not frequency scan and will prohibit automatic operator switching even if it receives border area information. In this case, less frequency scanning also allows for longer battery life.

### Brief Description of the Drawings

Figure 1. is block diagram of a receiving terminal, a preferred embodiment using the automatic operator switching control method related to said invention.
Figure 2. is a flowchart showing the automatic operator switching procedure of the preferred embodiment.
Figure 3. is a view showing ERMES system information partition framework.
Figure 4. is a view showing ERMES message partition framework.
Figure 5. is a diagram showing the relative positions of a moving receiving terminal to the adjacent service areas of two operators.

### Description of a Preferred Embodiment

A preferred embodiment of the present invention will be described below in conjunction with the diagrams.

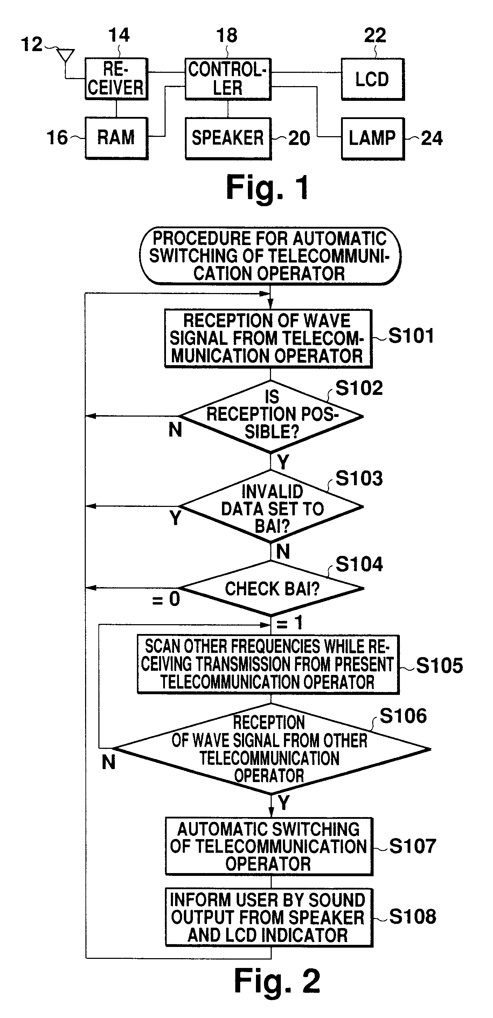

Figure 1 shows a simplified block diagram of a receiving terminal utilizing an automatic operator switching control method of the present invention. In Figure 1, the receiving terminal which serves as receiving station consists of the following parts: a receiver 14, which receives via an antenna 12 information transmitted to it from a transmission station belonging to some communication operator and which conducts frequency scanning; a RAM 16, which serves as a storage device for received information; a controller 18, which serves as means for controlling processes involving the terminal as a whole, such as searching received system information for any border area information or invalidate border area information data, and automatic operator switching; a speaker 20, which serves as an auditory means of notifying the user that automatic operator switching has taken place; and an LCD (Liquid Crystal Display) 22 and a lamp, or LED (Light-Emitting Diode) 24 which serve as visual means of alerting the user. Needless to say, a power supply and switches, etc., are also necessary.

The most notable feature of this preferred embodiment is that the occurrence of an automatic operator switch at the receiving terminal is indicated by sound output from the speaker 20, a display on the LCD, and lighting of the lamp; therefore, it is possible to immediately call to request that the operator providing information transmission services be switched.

The second notable feature of the this preferred embodiment is that while invalidate border area information date is being received, even if the reception of wave signals from other operators is possible, the automatic switching of operators upon receiving border area information is prohibited.

The above-mentioned invalidate border area information (BAI) data refers to the following. Usually, when the received border area information is flagged, a frequency scan is conducted and when a receivable frequency from another operator is found, automatic switching of operators occurs. The invalidate data prohibits such a switch. In the preferred embodiment, the additional information indicator (AIN) within the message partition in Figure 4 contains a 4-bit code to invalidate the BAI, and the additional information field (AIF) contains a 2-bit code to add, delete, or delete previously added data, etc., plus a 1-bit code to serve as a flag for invalidate data. When this invalidate data is, for example, 1, the BAI is invalid, and when it is 0, the BAI is valid.

Figure 2 shows a flowchart for the automatic operator switching procedures of the receiving terminal. Below, the operation of a preferred embodiment will be explained in conjunction with Figures 2 and 5.

When a receiving terminal is in position P1, it receives radio signals from transmission station A-2 of Communication Operator A (step 101). If reception is possible and information has been received (step 102), then the previously set border area information (BAI) is checked to see whether it is valid or invalid (step 103). If the BAI is valid, the BAI in the received information is checked (step 104). At this point, BAI=0, and therefore control returns to step 101. The receiving terminal in a preferred embodiment is equipped with a battery saving mode, and therefore performs intermittent reception. Therefore, the receiving terminal repeats radio signal reception at fixed intervals.

When the receiving terminal has moved to position P2, it receives radio signals from transmission station A-4 of Communication Operator A (step 101). If reception is possible and information has been received (step 102), then the BAI in the receiving terminal is checked (step 103), and if it is valid, the BAI in the received information is checked (step 104). At this point, since the BAI is 1, other frequencies are scanned for other operators with receivable information (step 105). Here, at position P2, it is not possible to receive signals from other operators (step 106), and therefore reception from transmission site A-4 continues.

When the receiving terminal has moved to position P3, the receiving station can receive radio signals from transmission site B-2 (step 106), and therefore the switch from Operator A to Operator B takes place automatically (step 107). When the controller 18 has completed an automatic operator switch, the speaker 20 emits a sound to indicate that a switch has occurred. Moreover, the new operator can be displayed on the LCD, and lamps, etc., can be made to light (step 108). By displaying the operator on the LCD 22, the user can know which operator he has been switched to, and he can make an immediate request for a switch of operators.

When the user hears the sound from the speaker (20), he can acknowledge and can stop the sound by depressing a button (not shown in figure). Of course, the sound and lamp can also be set to turn off automatically after a certain period of time. Such a mechanism would simply be a design detail of the preferred embodiment. When the user realizes that automatic operator switching has taken place, he contacts Operator A and requests that his information transmission provider be switched to Operator B. Operator A subsequently contacts Operator B, and henceforth the user receives his messages from Operator B. Operator A ceases providing information transmission services to the receiving terminal.

As stated above, according to the preferred embodiment, since it is possible to notify the user that the receiving terminal has automatically switched operators by the output of sound, display, and light, etc., it is possible for the user to immediately contact the operator by telephone. Therefore, it is possible to prevent errors in message reception.

A second feature of a preferred embodiment, the invalidate data of the BAI, will be explained below.

In step 103, in the above example, within the information received from the operator, if the invalidate data is set in the additional information field (AIF), then there is no frequency scanning even if the BAI is 1, and there is a return to step 101. In other words, it is possible to not switch to another operator. This mechanism is convenient in the following situation. For a user who lives in the vicinity of border line 1 but who usually does not cross the border line, each time there is a change in the BAI flag there would be frequency scanning and automatic operator switching would occur, necessitating a call to the operator. Moreover, this would be accompanied by a sound from the speaker 20, thus wasting battery power. Therefore, by contacting the operator and having the transmitted information set in advance to the BAI invalidate data, frequent automatic switches can be suppressed, and it is possible to have no automatic operator switching even if the receiving terminal is used alternately in zones where the BAI is 0 or 1. This eliminates waste of battery power.

Therefore, as long as the receiving terminal has received the invalidate border area information data from the operator providing information transmission services, while this invalidate data remains in memory there is no automatic operator switching upon the reception of border area information even if reception of radio signals from other operators is possible. Only if the user exits the service area of the above-mentioned operator will automatic switching occur, and this will be notified to the user immediately. As a result, loss of messages can be almost completely eliminated and efficient automatic operator switching can be provided. Needless to say, when system information to validate or invalidate the BAI is received, it changes the data inside the receiving terminal.

The Preferred Embodiment is equipped with a speaker 20, lamp 24, etc., as indicators, using sound and light to notify the user of automatic operator switches. Apart from this example, however, the receiver can also be designed with a vibrating section to alert the user through vibrations, or combinations and applications thereof are also possible.

In this way, a system of automatic switching control according to the present invention can be provided without changing the existing ERMES framework. While there has been described what is at present considered to be a preferred embodiment of the invention, it will be understood that various modifications may be made thereto, and it is intended that the appended claims cover all such modifications as fall within the true spirit and scope of the invention.

## Claims

1. A system for controlling automatic switching of telecommunication operators, each of said telecommunication operators having at least one transmitting station and providing information transmission services to a plurality of mobile receiving stations, each of said receiving stations being capable of scanning an entire frequency band of receivable radio waves when receiving border area information, and of automatically switching from the current telecommunication operator to another telecommunication operator,
wherein said mobile receiving station has indication means for indicating to the user the fact that the telecommunication operator has been switched.

2. The System according to claim 1, wherein said indication means indicates to the user by outputting sound.

3. The system according to claim 1, wherein said indication means indicates to the user by a visual display.

4. A system for controlling automatic switching of telecommunication operators, each of said telecommunication operators having at least one transmitting station and providing information transmission services to a plurality of mobile receiving stations, each of said receiving stations being capable of scanning an entire frequency band of receivable radio waves when receiving border area information, and of automatically switching from the current telecommunication operator to another telecommunication operator,
wherein said mobile receiving station has indication means for indicating to the user the fact that the telecommunication operator has been switched and the identity of the new telecommunication operator.

5. A system for automatic switching control the system according to claim 4, wherein said indication means indicates to the user by outputting sound.

6. A system for automatic common operator switching control the system according to claim 4, wherein said indication means indicates to the user by a visual display.

7. A method for controlling automatic switching of telecommunication operators, each of said telecommunication operators having at least one transmitting station and providing information transmission services to a plurality of mobile receiving stations, each of said receiving stations being capable of scanning an entire frequency band of receivable radio waves when receiving border area information, and of automatically switching from the current telecommunication operator to another telecommunication operator, said method comprising the steps of:
(a) receiving radio waves from a telecommunication operator;
(b) checking validity of border area information when receiving such border area information;
(c) switching the telecommunication operator to another telecommunication operator when receiving radio waves from that other telecommunication operator, on the condition that the border area information is valid; and
(d) indicating to the user the fact that the telecommunication operator has been switched.

8. A System for controlling automatic switching of telecommunication operators, each of said telecommunication operators having at least one transmitting station and providing information transmission services to a plurality of mobile receiving stations, each of said receiving stations being capable of scanning an entire frequency band of receivable radio waves when receiving border area information or when being located in a predetermined area, and of automatically switching from the current telecommunication operator to another telecommunication operator, wherein said receiving station inhibits the switching of the telecommunication operator during receiving and recording invalidate border area information data.

9. A system for automatic common operator switching control the system according to claim 8, further comprising:
a means for detecting band area information invalidate data in received wave signals; and
a means for controlling operator switching according to said invalidate data.

10. A system for automatic common operator switching control the system according to claim 9 wherein said receiving terminal has indication means to indicate to the users when an automatic operator switch has occurred.

11. A system for controlling automatic switching of telecommunation operators, each of said communication operators having at least one transmitting station and providing information transmission services to a plurality of mobile receiving stations, each of said receiving stations being capable of scanning an entire frequency band of receivable radio waves when receiving border area information or when being located in a predetermined area, and of automatically switching from the current telecommunication operator to another telecommunication operator, wherein said transmitting station transmits invalidate border area information data, as well as border area information.

12. Method for controlling automatic switching of telecommunication operators, each of said telecommunication operators having at least one transmitting station and providing information transmission service to a plurality of mobile receiving stations, each of said receiving stations being capable of scanning an entire frequency band of receivable radio waves when receiving such border area information or when being located in a predetermined area, and of automatically switching from the current telecommunication operator to another telecommunication operator, said method comprising the steps of:
(a) receiving radio waves from a telecommunication operator at a receiving station; and
(b) inhibiting the switching of telecommunication operators when receiving invalidate border area information data, regardless of whether or not radio waves are received from telecommunication operators.
